# EUROPEAN PATENT SPECIFICATION

(11) **EP 0 777 423 B1**
(45) Date of publication and mention of the grant of the patent: **10.02.1999**
(21) Application number: 95931177.0
(22) Date of filing: 21.08.1995
(51) Int. Cl.: A23L 1/22, A23L 2/395, A23F 3/16, A23F 5/46

(54) **ENCAPSULATION OF VOLATILE AROMA COMPOUNDS**
EINKAPSELUNG VOM FLÜCHTIGER GESCHMACKSTOFFE
ENCAPSULATION DE COMPOSES AROMATIQUES VOLATILS

(30) Priority: 06.09.1994 US 300777
(43) Date of publication of application: 11.06.1997
(73) Proprietor: SOCIETE DES PRODUITS NESTLE S.A., 1800 Vevey (CH)
(72) Inventor: GARWOOD, Robert, Bellefontaine, OH 43311 (US); MANDRALIS, Zenon Ioannis, Dublin, OH 43017 (US); WESTFALL, Scott, Marysville, OH 43040 (US)
(86) International application number: PCT/EP95/03323
(87) International publication number: WO 96/07333

(56) References cited:
- EP-A- 0 001 460
- EP-A- 0 037 675
- EP-A- 0 133 636
- EP-A- 0 158 460
- US-A- 2 297 599
- US-A- 2 856 291
- US-A- 4 820 543

## Description

This invention relates to a method of encapsulating volatile aromatic substances and to the aroma-containing capsules produced by the method. More particularly, the invention relates to the production of coextruded capsules in which a liquid core material containing volatile aroma compounds is encapsulated within a shell of hardened carbohydrate glass. The coextruded capsules have an extended shelf life with minimal loss and deterioration of the volatile aroma compounds during production and storage. However, upon contact with a hot aqueous medium, the capsules rapidly release a burst of aroma above the surface of the aqueous liquid.

In the manufacture of many powdered instant food and beverage products, such as instant coffee and tea, instant soups, instant desserts, and the like, the food or beverage components are subjected to heating during processing, which results in the loss or deterioration of volatile compounds which contribute to the desirable aroma and flavour of the product which is reconstituted by the consumer. To compensate for this loss during processing, natural and synthetic aromas and flavours, which consist of various combinations of alcohols, aldehydes, ketones, esters, and the like, typically are added to the finished product in an attempt to provide the product with the desired aroma and flavour. However, these natural and synthetic aromas and flavours are highly volatile and extremely sensitive to oxidation by atmospheric oxygen and to moisture. As a result, many of these substances, after incorporation in the food or beverage, lose much of their original aroma and flavour and fail to provide the consumer product with the desired characteristics.

For example, in the production of soluble coffee products ground roasted coffee is typically extracted with an aqueous liquid, with the extract being filtered, concentrated by evaporation and converted into powder form by freeze drying or spray drying. One of the major problems with this type of process is the fact that the powdered product obtained lacks the desired aroma of freshly brewed coffee, since the extraction, concentration and drying steps normally utilized in industrial production of soluble coffee products typically result in loss and degradation of volatile aroma constituents.

It has been recognized that the aroma and flavour of soluble coffee products upon reconstitution with a hot aqueous liquid, can be improved by incorporating in the soluble coffee powder aroma compounds which have been evolved during the coffee processing operation. A number of procedures to incorporate volatile coffee aroma compounds in soluble coffee powders have been proposed. However, these procedures have not been entirely satisfactory since aromatic coffee substances are extremely volatile and unstable. For example, in one proposed method, an aromatic coffee substance is emulsified in water and the emulsion is dropped into finely ground soluble coffee powder which is vibrated and allowed to stand for an appropriate time to coat the aromatic substances with coffee powder. However, the aromatic substance can not be adequately coated so that substantial amounts of the volatile aroma are lost during storage.

In recent years, a number of procedures have been suggested which utilize coffee glass in connection with natural and synthetic aromas. In these procedures coffee aroma typically is dispersed in an extruded matrix of coffee glass. For example, a coffee concentrate having about 88% to 97% total coffee derived solids, is heated to between about 60°C. to 130°C. to provide a viscous melt. Coffee aroma compounds are dispersed in the hot viscous melt, and the resulting melt is then extruded through a restricted orifice into a sheet. Upon cooling, the viscous melt solidifies to a hard glass having coffee aroma dispersed within the glass matrix. The cooled sheets are broken into pieces of a desired size which usually are incorporated into jars of soluble coffee products. Such prior procedures suffer from the disadvantage that the addition of coffee aroma to the hot, liquefied melt of coffee solids prior to extrusion causes considerable thermal degradation of the coffee aroma, which adversely affects the desired aroma profile in the product. Moreover, unless the aroma-containing coffee glass matrix is broken up into relatively fine particles, the rate of dissolution of the coffee glass in hot water is not sufficiently rapid to provide the desired burst of aroma in the cup. Rather, as the coffee glass particles dissolve the major portion of the aroma dispersed in the glass matrix, is released relatively slowly, and is dissolved in the water without ever leaving the cup. It has been suggested that the solubility of the coffee glass particles may be improved by gasification of the hot viscous coffee melt prior to extrusion. However, such a gasification procedure has not been entirely successful in releasing aroma constituents in a concentration sufficient to produce an aroma which the consumer can immediately sense as above-cup aroma.

Document EP-A-0133636 discloses capsules containing aromatic constituents for food.

Accordingly, in one aspect, this invention provides a capsule containing volatile aroma constituents, the capsule comprising an outer shell of hard amorphous carbohydrate glass surrounding a core of an edible liquid containing the volatile aroma constituents, the edible liquid containing an inert gas to rupture the outer shell upon heating of the capsule.

The invention has the advantage that the capsules may be stored for extended periods of time, either alone or in a consumer product, without significant loss or deterioration of aroma. However the aroma is readily released upon contact of the capsules with a hot aqueous liquid to provide a burst of aroma above the surface of the liquid which the consumer can immediately sense. Also, because the aroma is in the core, the aroma is not subject during processing to temperatures which would result in significant thermal degradation of the aroma.

Preferably the outer shell is formed of coffee solids, tea solids, corn syrup solids, maltodextrin, or corn dextrin, or mixtures thereof. Particularly preferred is an outer shell formed of coffee solids; especially coffee solids in the form of rigid amorphous coffee glass formed from a mixture containing from about 85% to about 97% by weight coffee solids (for example 87% to 94% by weight); the remainder being water. The coffee solids preferably have a glass transition temperature of from about 30°C to about 80°C (for example 30°C to 40°C).

The edible liquid is preferably a vegetable oil having a melting point in the range of about -18°C to about 50°C, or an essential oil. Particularly preferred is coffee oil.

The core may comprise from 30% to 50% of the volume of the capsule; preferably from 35% to 42% of the capsule volume. Preferably the outer shell has a tensile strength of at least about 90 kg. The capsule preferably has a diameter of about 0.5 to about 2.5 mm, preferably 1 to 2 mm, and a length of about 1 to about 5 mm; preferably 1 to 2 mm.

The inert gas is a gas which does not react with the aromatized edible liquid to any significant extent and hence does not significantly degrade the aroma or edible liquid. Suitable inert gases are carbon dioxide, nitrogen and the like. Carbon dioxide is preferred because it is reasonably inexpensive.

In another aspect, this invention provides a process of encapsulating volatile aroma constituents, the process comprising
dissolving, under pressure, an inert gas in an aromatized edible liquid,
forming a melt from an edible carbohydrate material which forms a rigid carbohydrate glass upon cooling from a molten state,
coextruding the melt and the edible liquid in the form of a continuous extrudate having a continuous outer shell of the edible carbohydrate material surrounding an inner core of the edible liquid, the continuous extrudate being extruded into a pressure zone having a pressure higher than the internal pressure of the inert gas in the edible liquid,
transversely subdividing the coextruded stream into sealed capsules of predetermined length, and
retaining the coextruded material in the pressure zone until the carbohydrate material has cooled to form a rigid carbohydrate glass to provide capsules having a shell of hardened, amorphous carbohydrate glass surrounding an inner core of gasified, aromatized liquid.

The carbohydrate melt forming the outer shell is at an elevated temperature as it is discharged from the coextrusion apparatus but rapidly cools to undergo a phase transition from a melt to a hard carbohydrate glass. This provides the capsules with highly impervious walls which may retain at least 80%, preferably 95% or more, of the volatile aroma compounds in the capsules.

Preferably the aromatized edible liquid is a coffee oil having coffee aroma constituents dissolved in it. Preferably the melt is a coffee solids mixture containing from 85% to 97% by weight coffee solids and from 3% to 15% by weight water, the melt being at a temperature of from about 70°C to about 110°C.

The inert gas is preferably carbon dioxide and the carbon dioxide is preferably injected into the edible liquid at a pressure of about 69 kPa to about 275 kPa and at a temperature of from 10°C to 50°C.

The pressure zone is preferably maintained at a pressure of at least about 275 kPa. This prevents the capsules from rupturing prior to being able to harden.

The molten carbohydrate material and the edible liquid may be coextruded through a die orifice having a diameter of from 0.5 to 2 mm, and the continuous extrudate may be formed into sealed capsules each having a length of between 0.5 to 5 mm.

The process may comprise the further step of stretching the continuous extrudate to reduce the cross-sectional diameter of the extrudate prior to subdividing the extrudate into capsules.

The capsules may be contacted with edible anti-tacking agents, such as soluble coffee powder, to prevent sticking.

The invention also provides the capsules produced by the method defined above.

In use, upon contact of the capsules with a hot aqueous liquid such as water, the inert gas dissolved in the aromatized liquid core expands to rupture the walls of the capsule. This occurs promptly after the capsules are contacted with the liquid and releases the edible liquid which spreads across the surface of the cup. Aroma constituents volatilize from the liquid into the atmosphere above the surface of the water to produce a burst of aroma. Fragments of the capsule will dissolve more slowly (usually within about 2 minutes) in the hot liquid.

The invention is particularly applicable, and will be described in regards to, the preparation of coffee aroma capsules. It will be understood, however, that the principles of this invention may be used to encapsulate numerous other volatile aroma constituents, including essential oils, for incorporation in a variety of instant consumer products, such as instant soups and teas.

The capsules may be uniformly distributed by any suitable means in jars of a soluble food product. The level of capsule incorporation into soluble food product may vary within wide limits, typically from 1 to 10% by weight, depending on the size of the capsules themselves and the volume fraction of payload. As a general rule, the smaller the capsules, the greater the amount that may be incorporated in the soluble food product.

Embodiments of the invention are now described, by way of example only, with reference to the drawings in which:
Fig. 1 is a schematic flow sheet illustrating a process for producing capsules;
Fig. 2 is an enlarged cross-sectional view of the coextrusion apparatus for producing the capsules; and
Fig. 3 is a schematic flow chart depicting one embodiment for aromatizing a liquid oil used as the core in the capsules.

The process involves producing capsules from an aromatized edible liquid, which forms a liquid core portion, and an edible carbohydrate material, which forms the wall portions of the capsules to be produced.

A wide variety of food grade liquids may be used as the aromatized edible liquid as long as the liquid is not a solvent for the edible carbohydrate material, and is compatible with the specific end use intended for the capsules. Edible liquids which may be used include edible oils having a melting point in the range of from about -18°C to about 50°C. For example, suitable oils are safflower oil, peanut oil, cotton seed oil, corn oil, coffee oil, olive oil, soybean oil, sesame oil, oils derived from other vegetable sources, and essential oils such as lemon oil, lime oil, orange oil, and the like. Medium chain triglycerides, composed of fatty acids having from 6 to 12 carbon atoms, may also be used as the edible liquid. Blends of these oils with a water soluble food grade solvent, such as triethyl citrate, triacetin, glycerol, ethanol, fatty acids and the like, may also be used.

The selection of a particular edible liquid will generally be dictated by the specific end use intended for the capsules. For example, in preparing coffee aroma capsules, the edible liquid is preferably coffee oil. This enables the production of capsules based entirely on coffee and coffee derivatives.

The edible liquid may be aromatized by any suitable means; for example by injecting volatile aroma constituents under agitation, by dissolving or emulsifying the aroma constituent in the edible liquid, and the like. A variety of volatile aroma compounds may be used. For example, natural and/or artificial aroma constituents of meat, seafood, fruits, vegetables, spices, coffee, etc. may be used to aromatize the edible liquid. In addition, the volatile aroma constituents may inherently be present in the edible liquid, such as when essential oils are used as the edible liquid. Then the addition of separate aroma constituents to the edible liquid is not essential. The selection of a specific aroma constituents will, of course, depend on the specific end use intended for the capsules.

In the preparation of coffee aroma capsules, the aroma constituents are preferably coffee aroma gases. The coffee aroma gases may be evolved at any of several points in the processing of coffee, for example gases evolved during roasting of green coffee ("roaster gases"), gases evolved during grinding of roasted whole beans ("grinder gases") and those evolved during infusion of ground roasted coffee ("infusion gases"). Preferably, the coffee aroma gas is used in the form of a cryogenically condensed aroma frost which may be produced as described in US patent 5182926. The aroma frost is preferably dissolved in a coffee oil with the mass ratio of coffee oil to aroma frost being greater than 1:0.5, and preferably from about 1:0.65 to about 1:0.9.

The edible carbohydrate material may be any suitable carbohydrate material which is capable of forming a glass to provide capsules having a hardened, continuous, impervious shell. To form such a glass, the edible carbohydrate material is heated to a temperature above its glass transition temperature to form a viscous melt. It is then allowed to cool to ambient temperatures to form a hard, stable, impermeable glass. Particularly suitable are edible carbohydrate materials which have a glass transition temperature of between about 20°C to 80°C. Suitable wall materials include soluble coffee solids, soluble tea solids, corn syrup solids, maltodextrin, corn dextrin, and the like.

The edible carbohydrate material may also be selected as desired but is best selected to accord with the desired end use. For example, in the production of coffee aroma capsules, the edible carbohydrate material preferably is formed from a homogeneous mixture of soluble coffee solids and water. For example, a mixture of from 85% to 97% by weight coffee solids and between about 3% to 15% by weight water is suitable. Such a mixture has a glass transition temperature of between 20°C and 80°C, typically between 30°C to 40°C. Also, when this mixture is heated to form a hot melt and then cooled, a hard, rigid, brittle amorphous coffee glass is obtained.

Such a mixture can be prepared from coffee extract by concentrating the extract, for example by falling film evaporation followed by scraped surface evaporation or other suitable procedures, to obtain a solids content of at least 85%. The coffee mixture can also be obtained by mixing dried coffee solids, spray dried, freeze dried or otherwise, with sufficient water or coffee extract to provide a mixture having a moisture content of between 3% and 15%.

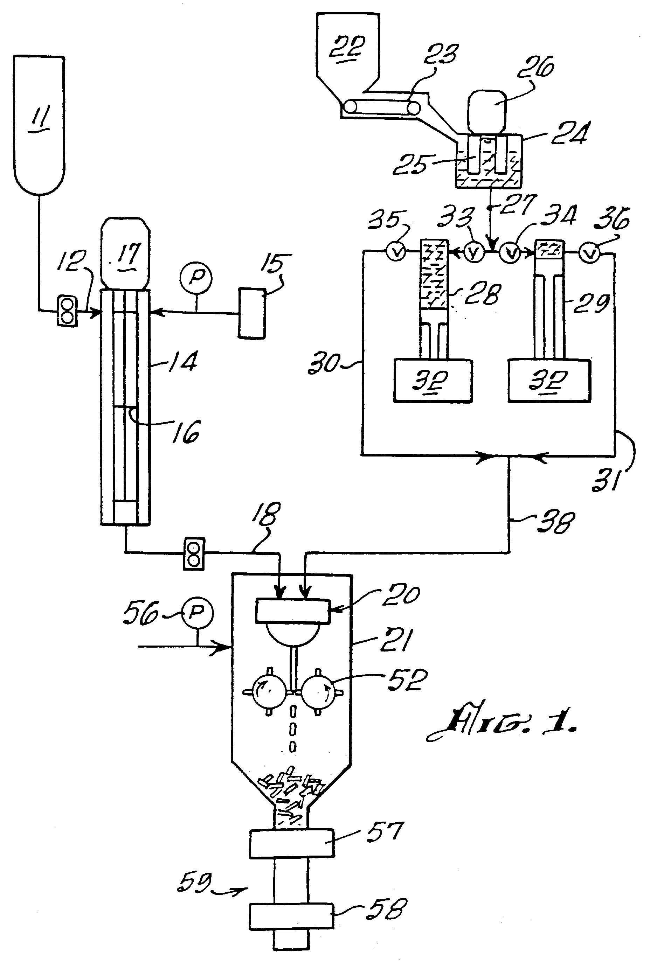

Referring now to Figure 1, a process for the production of coffee aroma capsules is described. An aromatized and edible coffee oil is held in a tank 11. The coffee oil is pumped from the tank 11 through a supply line 12 into a pressure column 14. An inert gas, preferably carbon dioxide, is injected into oil in the pressure column 14 from a suitable source 15 and is uniformly blended with the coffee oil under agitation. This may be achieved by means of wiping blades 16 driven by a motor 17. In this way the aromatized oil is contacted with the inert gas under pressure so that the oil is saturated with the inert gas.

The extent of carbonation of the oil is dependent largely on the temperature and pressure conditions in the pressure column 14. Therefore the conditions should selected such that the amount of carbon dioxide introduced into the oil is sufficient to rupture the capsule when the capsule is contacted with hot water (above about 60°C), but insufficient to rupture the capsule at room temperature once the walls of the capsule have rigidified. Conditions in the range of about 10° to 50°C and from about 70 kPa to about 275 kPa (about 10 to 40 psi) are suitable. Preferably the coffee oil is carbonated at about 150 kPa (22 psi) because then, for each gram of oil carbonated. 5.5 cm³ of gas will be evolved when capsules are contacted with hot water. This amount of gas is sufficient to rupture the capsule walls in these circumstances.

The aromatized, carbonated oil is pumped under high pressure from the pressure column 14, through a core transfer line 18, to a coextrusion die assembly 20.

Dried, soluble coffee solids are stored in a hopper 22. Weighed quantities of the coffee solids are transferred from the hopper 22, using an endless belt 23 mounted adjacent an opening in the base of the hopper 22, to a mixing tank 24. Sufficient water is added to the mixing tank 24 to form a coffee solids mixture having a total coffee solids concentration of from 85% to 97%, and a water content of from 3% to 15%. The coffee solids mixture in the mixing tank 24 is heated to a temperature sufficient to form molten coffee solids, usually between about 70°C to 110°C, preferably 95°C to 105°C. The molten coffee solids are agitated by means of paddles 25 driven by a motor 26 to provide a homogeneous, viscous, coffee melt. The coffee solids may be heated by any suitable means; for example, a steam jacket surrounding the tank 24, steam injection, heating coils, radiant heat, and the like.

The molten coffee solids are pumped from the mixing tank 24, through an outlet line 27 to a pair of linear drive piston pumps 28, 29. Each piston pump 28, 29 operably communicates with a delivery conduit 30, 31, respectively. The delivery conduits 30,31 join to a capsule transfer line 38 which leads to the coextrusion die assembly 20. Each piston pump 28, 29 includes a tubular sleeve, a reciprocal piston within the sleeve and a piston rod secured to a piston assembly 32. Inlet valves 33, 34 control the flow of molten coffee solids into the piston pumps 28, 29 respectively, and discharge valves 35, 36 control the flow of the molten coffee solids from the piston pumps 28, 29 to the delivery conduits 30 and 31 respectively. As illustrated in Figure 1, the left piston pump 28 is in the retracted position and the right piston pump 29 is in the forward moving position having previously received a charge of molten coffee solids from the mixing tank 24. During this sequence, the right inlet valve 34 is closed and the right discharge valve 36 is open so as to define an open flow path for the molten coffee solids into the right delivery conduit 31. During the retraction of the left piston pump 28, the left inlet valve 33 is open to enable a charge of molten coffee solids to be delivered to left pump 28. In this manner the reciprocal pumps 28, 29 operate in a batch-continuous manner so as to continuously feed a stream of molten coffee solids to the coextrusion die assembly 20; for example at pressures of the order of about 20000 kPa (3000 psi).

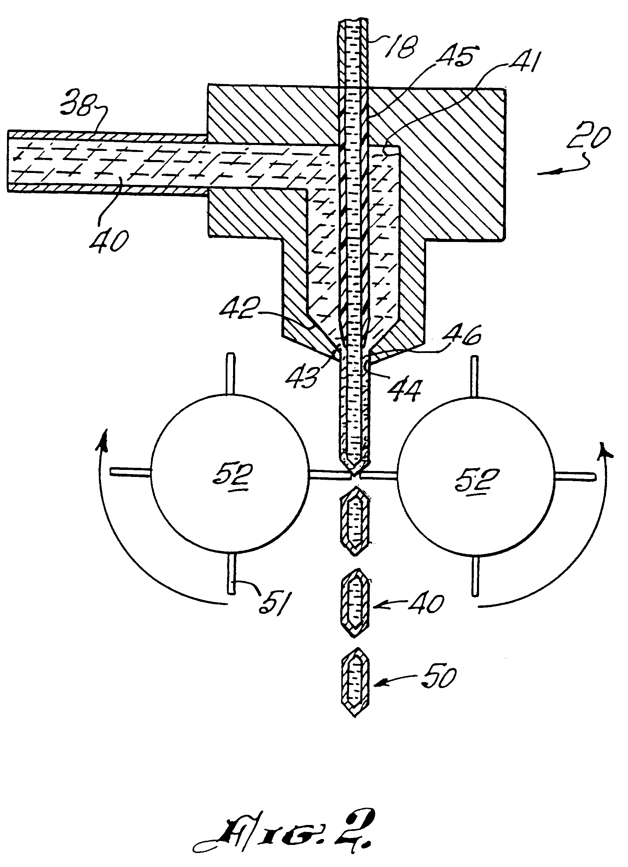

The coextrusion die assembly 20 is illustrated in more detail in Fig. 2. As shown, the die assembly 20 has a cylindrical chamber 41 adapted to receive molten coffee solids 40 from the capsule transfer line 38. The cylindrical chamber 41 has an inwardly tapering bottom wall 42 which terminates in a cylindrical opening 43 extending through the bottom wall 42 to define a die orifice 44. The die orifice 44 has a diameter of from about 0.5 to 2.5 mm, in the outer face of the die assembly 20. A conduit 45, which receives aromatized, carbonated oil from the core transfer line 18, is mounted concentrically within the chamber 41. The downstream end of the conduit 45, which terminates in the chamber 41 adjacent the cylindrical opening 43, has a frustoconical outer face. This downstream end of the conduit 45 is spaced from the inwardly tapering bottom wall 42 of the chamber 41 to define an annular extrusion passage 46 therebetween through which the molten coffee solids 40 is extruded in the form of a continuous tubular shell from the die orifice 44.

Aromatized, carbonated oil is pumped through the conduit 45 and is discharged from the die orifice 44 as a pressurized liquid core within the tubular shell of molten coffee solids. Thus, the molten coffee solids and the aromatized, gasified coffee oil are coextruded from die assembly 20 as a continuous extrudate of narrow cross-section with an outside diameter of between 0.5 to 2.5 mm. The continuous extrudate has a continuous outer shell of molten coffee solids surrounding an inner core of aromatized, gasified coffee oil.

The continuous extrudate is then pinched into pieces of predetermined length, typically from 1 to 5 mm, and preferably from 1.5 to 3 mm, by any suitable means. For example, the continuous extrudate may be pinched into capsules by blades 51 carried on a pair of opposed counter-rotating rollers 52 mounted beneath the die orifice 44. Preferably the rollers 52 are positioned a suitable distance apart to provide for the transverse subdivision of the continuous extrudate into individual capsules 50 of the desired length. It is also possible to have one roller without blades; the blades of the other roller cutting the continuous extrudate against the surface of the first roller. The outer shell of the continuous extrudate is warm, relatively soft and in a plastic state as it is extruded from the die orifice 44. Therefore, as the extrudate passes between the opposed rollers 52, the blades 51 are able pinch together the shell of the extrudate to seal the ends of the capsule and sever the capsules from the end portion of the continuous extrudate.

The speed of the rollers 52 may be so regulated that the blades 51 have approximately the same peripheral speed as the speed at which the extrudate moves downwardly from the die orifice 44. However, the speed of the rollers 52 is preferably adjusted so that the blades 51 have a faster peripheral speed than the rate at which the extrudate exits from the die orifice 44. This stretches the extrudate and reduces its diameter prior to forming it into discrete capsules 50, thereby producing thinner capsules. If only one roller has blades, the extrudate may be pulled around the roller without the blades for part of a revolution to achieve a similar stretching effect.

While the molten coffee solids are still plastic, an external pressure is applied to the continuous extrudate and the individual capsules 50. That is, the continuous extrudate is extruded from the die assembly 20 into a pressure chamber 21 which includes the die assembly 20. Hence the extrudate is formed into sealed capsules 50 within the pressure chamber 21 under pressure. The capsules 50 are retained in pressure chamber 21 until the molten coffee solids have cooled sufficiently to undergo transition to a hard, glass state. In this way, because there is no difference of pressure over the capsules 50, the capsules 50 are prevented from rupturing while the coffee solids are still soft and pliable.

The pressure chamber 21 is maintained under elevated pressure by means of a pump 56 delivering air or other gas under pressure into the pressure chamber 21. The pressure in the pressure chamber 21 is maintained at a pressure greater than the internal pressure generated by the carbon dioxide in the coffee oil at extrusion temperatures. Preferably the pressure in the pressure chamber 21 is maintained above about 275 kPa (40 psi). When cooled to room temperature the coffee solids solidify to form hard, amorphous coffee glass having a tensile strength in excess of about 90 kg (200 psi/in²), which is sufficient to retain the carbon dioxide in solution in the coffee oil during storage and handling. If necessary or desired, the pressure chamber 21 may be cooled to facilitate rapid cooling of the capsules 50.

If necessary, an agitated bed of soluble coffee fines or other finely divided, edible anti-tacking agents, is maintained at the base of the pressure chamber 21 to coat the capsules 50 to prevent their sticking together. The fines may be introduced into the pressure chamber 21 through a conventional air lock (not shown) in the sidewall of the pressure chamber 21. A second conventional air lock 59, controlled by upper and lower valves 57, 58, is mounted at the base of the pressure chamber 21 for removal of capsules 50 from the pressure chamber 21, once the capsules 50 have cooled and rigidified.

It has been found that retention of aroma in the capsules 50 may be maximized by controlling of the geometry of the capsules 50. For example, by dimensioning the capsules 50 so that the coffee oil occupies from 30% to 50% of the capsule volume, at least 80% of the aroma will be retained in the core after 6 months storage. Maximum retention of aroma, that is, 95% or more after 6 to 12 months of storage can be obtained when the capsules 50 are dimensioned so that the coffee oil occupies 35% to 42% of the capsule volume.

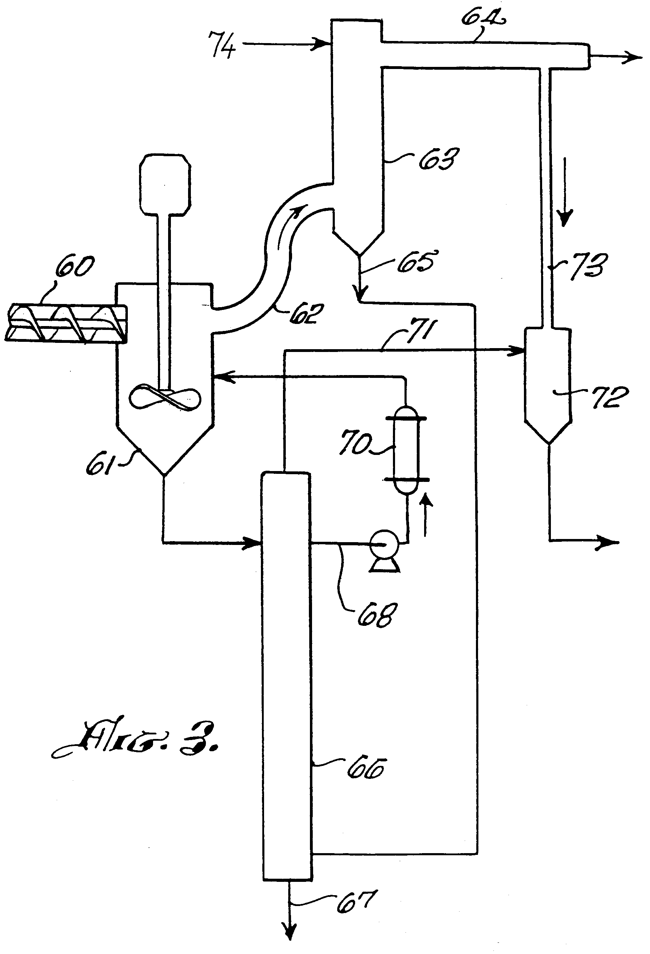

The coffee oil may be aromatized using the apparatus illustrated in Fig. 3, which is adapted to remove substantially all of the water which may be present in the coffee oil. Since water is detrimental to the stability of coffee aroma, substantially all of the water which may be contained in the coffee oil is preferably removed prior to aromatization. As shown, cryogenically condensed coffee aroma frost, which consists largely of carbon dioxide together with water vapour and the characteristic aromatic constituents of roasted coffee, is carried by an auger screw 60 into a frost melt tank 61. The frost melt tank 61 contains agitated coffee oil under conditions such that the aroma frost sublimes/melts, resulting in the production of a gas phase comprising carbon dioxide and aroma constituents, and a liquid phase comprising a mixture of oil, water and aroma constituents. The liquid phase is lead off to the top of a liquid-liquid extraction column 66. The gas phase generated by the subliming frost is carried from the frost melt tank 61 in a gas line 62 to a packed scrubbing column 63. Fresh coffee oil is introduced into the upper end of the scrubbing column 63 from a conduit 74 and descends through the column 63, removing oil soluble aroma constituents from the gas, with the aroma-depleted gas being vented through a gas line 64. The coffee oil, which contains aroma constituents removed from the gas, is carried from the scrubbing column 63 in a liquid line 65 to the base of the liquid-liquid extraction column 66. In the extraction column 66, the oil ascends counter current to a descending flow of the liquid phase removed from the base of the frost melt tank 61. As the liquid phase descends the extraction column 66, those components with significant oil solubility are scrubbed out of the liquid phase into the ascending oil. The oil insoluble components, primarily water, of the liquid phase are removed from the base of extraction column 66 through an outlet line 67 and are discarded.

At the upper end of extraction column 66, a portion of the aromatized oil is removed through a recycle line 68 and mildly heated by passage through heat exchanger 70 and recycled back to the frost melt tank 61. At the top of the extraction column 66, substantially water-free, aromatized oil is carried through a draw-off line 71 to a surge tank 72. The surge tank preferably is blanketed by gas vented from the scrubbing column 63 through a line 73, to reduce the potential for oxygen damage to the aromatized oil. From the surge tank 72, the oil may be pumped to a centrifuge (not shown) to remove the last traces of water. The aromatized oil is then pumped to the pressure column 14 in which it is carbonated, as shown in Fig. 1.

It will be appreciated that a process for producing coffee aroma capsules has been described for simplicity of illustration and that the invention is not limited to the production of coffee aroma capsules. Tea capsules, for example, can be produced in an analogous manner from soluble tea solids, an edible oil, and tea aromas.

The capsules may be incorporated in a variety of consumer products. For example, capsules comprising a hardened shell of amorphous coffee solids surrounding aromatized and pressurized coffee oil, may simply be mixed with soluble coffee powder, with the amount of coffee aroma capsules incorporated in the soluble coffee powder varying from about 1% to 10% by weight of the soluble coffee. Capsules containing volatile aroma compounds may also be included in a variety of instant food products. For example, capsules containing the aroma constituents of vegetables and/or beef in a liquid oil core surrounded by a shell of hardened carbohydrate glass formed of corn syrup solids, may be used in the preparation of instant soup products in amounts of from about 0.2 to 5% by weight of the instant product.

Generally the amount of aroma capsules added to a consumer product can vary from as little as 0.01% to as much as 10% by weight. The amount of aroma capsules which is added to a particular product is generally dependent on the desired level of aroma that is to be imparted to the food or beverage product and the aroma strength of the particular capsules.

The following example is provided to further illustrate, not to limit, the invention. All parts and percentages are by weight unless otherwise indicated.

### EXAMPLE

A premeasured amount of soluble coffee powder is mixed with sufficient water to produce a thick, viscous coffee paste having a coffee solids content of 92% by weight. The coffee paste is heated to about 90°C and is pumped at a pressure of about 19000 kPa (2770 psi) using an ISCO 500D syringe to an coextrusion die assembly as illustrated in Fig. 2. Aromatized coffee oil is carbonated by injecting carbon dioxide gas at a pressure of 172.5 kPa (25 psi) into the oil, with agitation. The aromatized, carbonated oil is pumped, using a piston pump, to the coextrusion die assembly. The molten coffee paste is co-extruded as a continuous shell from a die orifice having a diameter of 1.98 mm (0.078 in.) and an inner diameter of about 0.48 mm (0.019 in.) at a rate of 6 ml/minute. The aromatized, carbonated oil is co-extruded within the shell at a rate of 4 ml/minute. The continuous shell is extruded into a pressure chamber that is maintained at a pressure of 345 kPa (50 psi) under carbon dioxide gas. The chamber is maintained at a temperature of between about 20°C to 30°C.

The continuous shell which surrounds the carbonated oil is pinched between opposing rollers to form discrete, sealed capsules having a length of about 3 mm and a diameter of about 1 mm. The capsules are retained in the pressure chamber for about 80 minutes at which time the capsules are at about ambient temperature. The capsules are then are removed from the pressure chamber.

The resulting capsules have a hard amorphous coffee glass shell surrounding an inner liquid core of aromatized carbonated coffee oil. When the capsules are dropped into a cup of hot water (above about 60°C) the coffee glass shell of the capsules ruptures within about 10 seconds due to the increase in pressure resulting from the high temperatures. The aromatized oil is released and spreads across the surface of the water. At the surface, the aromatic constituents volatilize into the atmosphere above the cup and produce a burst of aroma. The fragments of the amorphous coffee glass shell sink to the bottom of the cup where they slowly dissolve, typically within about two minutes.

By way of comparison, capsules which are produced by the same procedure, with the sole exception that the aromatized oil is not carbonated or otherwise pressurized, when added to a cup of hot water (above about 60°C) do not immediately rupture. Rather, the intact capsules sink to the bottom of the cup and after about 2 minutes the amorphous glass wall material dissolves and the oil core rises to the surface of the water.

## Claims

1. A capsule containing volatile aroma constituents, the capsule comprising an outer shell of hard amorphous carbohydrate glass surrounding a core of an edible liquid containing the volatile aroma constituents, the edible liquid containing an inert gas to rupture the outer shell upon heating of the capsule.

2. A capsule as defined in claim 1 in which the outer shell is formed of coffee solids, tea solids, corn syrup solids, maltodextrin, or corn dextrin, or mixtures thereof.

3. A capsule as defined in claim 1 in which the outer shell comprises rigid amorphous coffee glass having a glass transition temperature of from 30°C to 80°C.

4. A capsule as defined in claim 1 in which the edible liquid is a vegetable oil having a melting point in the range of -18°C to 50°C, or an essential oil.

5. A capsule as defined in claim 4 in which the vegetable oil is coffee oil having coffee aroma constituents dissolved in it.

6. A capsule as defined in any one of claims 1 to 5 in which the core comprises from 30% to 50% of the volume of the capsule.

7. A capsule as defined in any one of claims 1 to 5 in which the outer shell has a tensile strength of at least 90 kg.

8. A process of encapsulating volatile aroma constituents, the process comprising
dissolving, under pressure, an inert gas in an aromatized edible liquid,
forming a melt from an edible carbohydrate material which forms a rigid carbohydrate glass upon cooling from a molten state,
coextruding the melt and the edible liquid in the form of a continuous extrudate having a continuous outer shell of the edible carbohydrate material surrounding an inner core of the edible liquid, the continuous extrudate being surrounding an inner core of the edible liquid, the continuous extrudate being extruded into a pressure zone having a pressure higher than the internal pressure of the inert gas in the edible liquid,
transversely subdividing the coextruded stream into sealed capsules of predetermined length, and
retaining the coextruded material in the pressure zone until the carbohydrate material has cooled to form a rigid carbohydrate glass to provide capsules having a shell of hardened, amorphous carbohydrate glass surrounding an inner core of gasified, aromatized liquid.

9. A process as defined in claim 8 in which the aromatized edible liquid is a coffee oil having coffee aroma constituents dissolved in it and the melt is a coffee solids mixture containing from 85% to 97% by weight coffee solids and from 3% to 15% by weight water the melt being at a temperature of from 70°C to 110°C.

10. A process as defined in claim 8 or claim 9 in which the inert gas is carbon dioxide and the carbon dioxide is injected into the edible liquid at a pressure of 69 kPa to 275 kPa and at a temperature of from 10°C to 50°C.

## Patentansprüche

1. Kapsel, die flüchtige Aromabestandteile enthält, wobei die Kapsel eine äußere Schale aus einem harten amorphen Kohlenhydratglas aufweist, die einen Kern aus einer genießbaren Flüssigkeit umgibt, die die flüchtigen Aromabestandteile enthält, wobei die genießbare Flüssigkeit ein Inertgas zum Zerreißen der äußeren Schale beim Erhitzen der Kapsel enthält.

2. Kapsel nach Anspruch 1, bei der die äußere Schale aus Kaffeefeststoffen, Teefeststoffen, Maisstärkesirupfeststoffen, Maltodextrin oder Maisdextrin oder Mischungen davon gebildet wird.

3. Kapsel nach Anspruch 1, bei der die äußere Schale ein starres amorphes Kaffeeglas mit einer Glasübergangstemperatur von 30°C bis 80°C aufweist.

4. Kapsel nach Anspruch 1, bei der die genießbare Flüssigkeit ein pflanzliches Öl mit einem Schmelzpunkt im Bereich von -18°C bis 50°C oder ein etherisches Öl ist.

5. Kapsel nach Anspruch 4, bei der das pflanzliche Öl Kaffeeöl ist, in dem Kaffeearomabestandteile aufgelöst sind.

6. Kapsel nach irgendeinem der Ansprüche 1 bis 5, bei der der Kern von 30 bis 50 Vol.-% der Kapsel ausmacht.

7. Kapsel nach irgendeinem der Ansprüche 1 bis 5, bei der die äußere Schale eine Zugfestigkeit von wenigtens 90 kg aufweist.

8. Verfahren zum Verkapseln von flüchtigen Aromabestandteilen, wobei das Verfahren umfaßt
Auflösen eines Inertgases in einer aromatisierten genießbaren Flüssigkeit unter Druck,
Bilden einer Schmelze aus einem genießbaren Kohlenhydratmaterial, das beim Abkühlen aus einem geschmolzenen Zustand ein starres Kohlenhydratglas bildet,
Koextrudieren der Schmelze und der genießbaren Flüssigkeit in Form eines kontinuierlichen Extrudats mit einer kontinuierlichen äußeren Schale aus dem genießbaren Kohlenhydratmaterial, die einen inneren Kern aus der genießbaren Flüssigkeit umgibt, wobei das kontinuierliche Extrudat einen inneren Kern der genießbaren Flüssigkeit umschließt, wobei das kontinuierliche Extrudat in eine Druckzone extrudiert wird, die einen Druck aufweist, der höher ist als der interne Druck des Inertgases in der genießbaren Flüssigkeit,
Aufteilen des koextrudierten Stroms in Querrichtung in verschlossene Kapseln einer vorgegebenen Länge, und
Halten des koextrudierten Materials in der Druckzone, bis das Kohlenhydratmaterial unter Bildung eines starren Kohlenhydratglases abgekühlt ist, um Kapseln zu erhalten, die eine Schale aus einem gehärteten amorphen Kohlenhydratglas aufweisen, die einen inneren Kern aus einer begasten aromatisierten Flüssigkeit umgibt.

9. Verfahren nach Anspruch 8, bei dem die aromatisierte genießbare Flüssigkeit ein Kaffeeöl ist, in dem Kaffeearomabestandteile gelöst sind, und bei dem die Schmelze eine Kaffeefeststoffschmelze ist, die von 85 bis 97 Gew.-% Kaffeefeststoffe sowie von 3 bis 15 Gew.-% Wasser enthält, wobei die Schmelze eine Temperatur von 70°C bis 110°C aufweist.

10. Verfahren nach Anspruch 8 oder Anspruch 9, bei dem das Inertgas Kohlendioxid ist und bei dem das Kohlendioxid in die genießbare Flüssigkeit unter einem Druck von 69 kPa bis 275 kPa bei einer Temperatur von 10°C bis 50°C injiziert wird.

## Revendications

1. Capsule contenant des constituants d'arôme volatils, ladite capsule comprenant une enveloppe extérieure de substance glucidique vitreuse amorphe dure entourant un noyau d'un liquide comestible contenant les constituants d'arôme volatils, le liquide comestible contenant un gaz inerte pour provoquer la rupture de l'enveloppe extérieure lors du chauffage de la capsule.

2. Capsule répondant à la définition suivant la revendication 1, dans laquelle l'enveloppe extérieure est formée de matière sèche de café, de matière sèche de thé, de sirop de glucose déshydraté, de maltodextrine, ou de dextrine de maïs ou bien de leurs mélanges.

3. Capsule répondant à la définition suivant la revendication 1, dans laquelle l'enveloppe extérieure comprend un verre de café amorphe rigide ayant une température de transition vitreuse comprise dans l'intervalle de 30°C à 80°C.

4. Capsule répondant à la définition suivant la revendication 1, dans laquelle le liquide comestible est une huile végétale ayant un point de fusion compris dans l'intervalle de -18°C à 50°C, ou bien une huile essentielle.

5. Capsule répondant à la définition suivant la revendication 4, dans laquelle l'huile végétale est une huile de café dans laquelle sont dissous des constituants d'arôme de café.

6. Capsule répondant à la définition suivant l'une quelconque des revendications 1 à 5, dans laquelle le noyau représente 30 % à 50 % du volume de la capsule.

7. Capsule répondant à la définition suivant l'une quelconque des revendications 1 à 5, dans laquelle l'enveloppe extérieure a une résistance à la traction d'au moins 90 kg.

8. Procédé pour encapsuler des constituants d'arôme volatils, ledit procédé comprenant les étapes consistant
à dissoudre, sous pression, un gaz inerte dans un liquide comestible aromatisé,
à former une masse fondue à partir d'une substance glucidique comestible qui forme une substance vitreuse glucidique rigide lors du refroidissement à partir d'un état fondu,
à coextruder la masse fondue et le liquide comestible sous forme d'un extrudat continu comprenant une enveloppe extérieure continue de la substance glucidique comestible entourant un noyau interne du liquide comestible, l'extrudat continu étant extrudé dans une zone sous pression qui est à une pression supérieure à la pression interne du gaz inerte dans le liquide comestible,
à subdiviser transversalement le courant coextrudé en capsules closes ayant une longueur prédéterminée, et
à retenir la matière coextrudée dans la zone sous pression jusqu'à ce que la substance glucidique se soit refroidie en formant une substance glucidique vitreuse rigide pour produire des capsules comportant une enveloppe de substance glucidique vitreuse amorphe durcie entourant un noyau interne de liquide aromatisé gazéifié.

9. Procédé répondant à la définition suivant la revendication 8, dans lequel le liquide comestible aromatisé consiste en une huile de café dans laquelle sont dissous des constituants d'arôme de café et la masse fondue consiste en un mélange à base de matière sèche de café contenant 85 % à 97 % en poids de matière sèche de café et 3 % à 15 % en poids d'eau, la masse fondue étant à une température comprise dans l'intervalle de 70°C à 110°C.

10. Procédé répondant à la définition suivant la revendication 8 ou la revendication 9, dans lequel le gaz inerte consiste en dioxyde de carbone et le dioxyde de carbone est injecté dans le liquide comestible à une pression comprise dans l'intervalle de 69 kPa à 275 kPa et à une température comprise dans l'intervalle de 10°C à 50°C.
